# DEMANDE DE BREVET EUROPEEN

(11) **EP 4 627 985 A1**
(43) Date de publication de la demande: **08.10.2025**
(21) Numéro de dépôt: 25158314.2
(22) Date de dépôt: 17.02.2025
(51) Int. Cl.: A47L 9/00, A47L 9/28, A47L 5/24, A47L 9/14

(54) **SYSTÈME DE NETTOYAGE COMPRENANT UN ASPIRATEUR ET UNE STATION D'ACCUEIL APTE À COLLECTER DES DÉCHETS PROVENANT DE L'ASPIRATEUR**

(30) Priorité: 05.04.2024 FR 2403524
(71) Demandeur: SEB S.A., 69130 Ecully (FR)
(72) Inventeur: VIVIER, Jean Damien, 69134 ECULLY CEDEX (FR); MAUDET, Pierre, 69134 ECULLY CEDEX (FR); FAURE, Michel, 69134 ECULLY CEDEX (FR)
(74) Mandataire: Germain Maureau

(57) **Abrégé**

Le système de nettoyage comprend un aspirateur (2) comprenant un récipient de collecte de déchets (12) ; une station d'accueil comprenant un réceptacle de vidange (25) configuré pour loger le récipient de collecte de déchets (12) et comportant des première et deuxième demi-coques (27, 28) montées mobiles l'une par rapport à l'autre entre une position ouverte et une position fermée. La station d'accueil comporte un premier dispositif d'étanchéité (34) fixé à la première demi-coque (27) et un deuxième dispositif d'étanchéité (35) fixé à la deuxième demi-coque (28), les premier et deuxième dispositifs d'étanchéité (34, 35) étant configurés pour coopérer de manière étanche avec le récipient de collecte de déchets (12) lorsque les première et deuxième demi-coques (27, 28) occupent la position fermée.

## Description

### Domaine technique

La présente invention concerne le domaine des aspirateurs permettant d'aspirer des poussières et des déchets présents sur une surface à nettoyer, qui peut par exemple être du carrelage, du parquet, du stratifié, de la moquette ou un tapis.

### Etat de la technique

Un système de nettoyage comprend de façon connue :
- un aspirateur comprenant :
   - un corps principal comportant un embout d'aspiration,
   - une poignée de préhension reliée mécaniquement au corps principal,
   - un dispositif de séparation et de collecte de déchets relié fluidiquement à l'embout d'aspiration, le dispositif de séparation et de collecte de déchets comportant un récipient de collecte de déchets pourvu d'un axe longitudinal central et d'une ouverture de vidange frontale, et une trappe de vidange frontale montée pivotante sur le récipient de collecte de déchets autour d'un axe de pivotement et entre une position d'obturation dans laquelle la trappe de vidange frontale obture l'ouverture de vidange frontale et une position de libération dans laquelle la trappe de vidange frontale libère l'ouverture de vidange frontale, et
   - un moteur d'aspiration logé dans le corps principal, le moteur d'aspiration étant configuré pour générer un flux d'air au travers de l'embout d'aspiration et du dispositif de séparation et de collecte de déchets, et
- une station d'accueil configurée pour accueillir l'aspirateur, la station d'accueil comprenant :
   - un réceptacle de vidange délimitant un logement de réception configuré pour loger au moins en partie le récipient de collecte de déchets et dans lequel sont aptes à être vidés les déchets contenus dans le récipient de collecte de déchets,
   - un dispositif de collecte relié fluidiquement au réceptacle de vidange et configuré pour collecter des déchets, provenant du récipient de collecte de déchets, lorsque le récipient de collecte de déchets est reçu dans le logement de réception, et
   - un dispositif d'aspiration configuré pour générer une dépression dans le logement de réception et pour convoyer des déchets, provenant du récipient de collecte de déchets, dans le dispositif de collecte.

Afin d'éviter la pénétration d'un flux d'air, provenant de l'extérieur de la station d'accueil, dans le récipient de vidange lors d'une opération de vidange, et d'assurer donc une aspiration efficace des déchets vers le dispositif de collecte de la station d'accueil, il pourrait être envisagé d'équiper la station d'accueil d'un dispositif d'étanchéité configuré pour être interposé entre le récipient de collecte de déchets et le réceptacle de vidange.

Cependant, la présence d'un tel dispositif d'étanchéité serait susceptible de générer des frottements lors de l'insertion du récipient de collecte de déchets dans le réceptacle de vidange, et donc de rendre moins aisée ladite insertion. De plus, des frottements répétés entre un tel dispositif d'étanchéité et le récipient de collecte de déchets seraient susceptibles de nuire à l'intégrité du dispositif d'étanchéité et donc de nuire à l'efficacité de la station d'accueil.

### Résumé de l'invention

La présente invention vise à remédier à tout ou partie de ces inconvénients.

Le problème technique à la base de l'invention consiste notamment à fournir un système de nettoyage qui soit de structure simple, fiable et ergonomique, tout en assurant un transfert efficace des déchets contenus dans un aspirateur dudit système de nettoyage vers une station d'accueil dudit système de nettoyage lorsque l'aspirateur est reçu dans la station d'accueil.

A cet effet, la présente invention concerne un système de nettoyage comprenant :
- un aspirateur comprenant :
   - un corps principal comportant un embout d'aspiration,
   - une poignée de préhension reliée mécaniquement au corps principal, et
   - un dispositif de séparation et de collecte de déchets relié fluidiquement à l'embout d'aspiration, le dispositif de séparation et de collecte de déchets comportant un récipient de collecte de déchets pourvu d'un axe longitudinal central et d'une ouverture de vidange, et un organe de vidange configuré pour occuper une configuration d'obturation dans laquelle l'organe de vidange obture l'ouverture de vidange et une configuration de libération dans laquelle l'organe de vidange libère l'ouverture de vidange, et
- une station d'accueil configurée pour accueillir l'aspirateur, la station d'accueil comprenant un réceptacle de vidange configuré pour loger au moins en partie le récipient de collecte de déchets lorsque l'aspirateur est accueilli par la station d'accueil.

Le réceptacle de vidange comporte une première demi-coque et une deuxième demi-coque montées mobiles l'une par rapport à l'autre entre une position ouverte dans laquelle les première et deuxième demi-coque sont disjointes et le récipient de collecte de déchets est apte à être inséré dans le réceptacle de vidange et une position fermée dans laquelle les première et deuxième demi-coque sont jointives et refermées l'une sur l'autre de manière à former un logement de réception ayant un axe longitudinal central et configuré pour loger au moins en partie le récipient de collecte de déchets, et la station d'accueil comporte un premier dispositif d'étanchéité fixé à la première demi-coque et un deuxième dispositif d'étanchéité fixé à la deuxième demi-coque, les premier et deuxième dispositifs d'étanchéité étant configurés pour coopérer de manière étanche avec le récipient de collecte de déchets, et par exemple pour venir en appui, c'est-à-dire exercés une force d'appui, contre le récipient de collecte de déchets, lorsque les première et deuxième demi-coques occupent la position fermée.

Un telle configuration du réceptacle de vidange, et en particulier le fait qu'il comporte des première et deuxième demi-coques mobiles entre une position ouverte et une position fermée, permet d'une part, lors d'une insertion du récipient de collecte de déchets dans le réceptacle de vidange, de limiter considérablement les risques de frottement entre le récipient de collecte de déchets et les première et deuxième demi-coques qui sont alors en position ouverte, et d'autre part, lorsque le récipient de collecte de déchets est logé dans le logement de réception, d'assurer une coopération optimale entre le récipient de collecte de déchets et les premier et deuxième dispositifs d'étanchéité (du fait que les première et deuxième demi-coques sont alors en position fermée).

Ainsi, la configuration spécifique du système de nettoyage selon la présente invention assure une insertion aisée du récipient de collecte de déchets dans le réceptacle de vidange, et confère une fiabilité et une efficacité accrues au système de nettoyage selon la présente invention.

Le système de nettoyage peut en outre présenter une ou plusieurs des caractéristiques suivantes, prises seules ou en combinaison.

Selon un mode de réalisation de l'invention, les première et deuxième demi-coques sont configurées pour être jointives selon un plan de jonction qui est sensiblement vertical lorsque la station d'accueil repose sur une surface horizontale et que les première et deuxième demi-coques occupent la position fermée.

Selon un mode de réalisation de l'invention, chacune des première et deuxième demi-coques comporte deux bords longitudinaux, les bords longitudinaux des première et deuxième demi-coques étant jointifs deux à deux lorsque les première et deuxième demi-coques occupent la position fermée.

Selon un mode de réalisation de l'invention, le réceptacle de vidange présente une forme globalement tubulaire lorsque les première et deuxième demi-coques occupent la position fermée.

Selon un mode de réalisation de l'invention, le réceptacle de vidange présente une section transversale qui est sensiblement circulaire lorsque les première et deuxième demi-coques occupent la position fermée.

Selon un mode de réalisation de l'invention, chacune des première et deuxième demi-coques présente une forme sensiblement semi-cylindrique.

Selon un mode de réalisation de l'invention, le réceptacle de vidange comporte une ouverture d'insertion supérieure à travers laquelle le récipient de collecte de déchets est apte à être inséré dans le réceptacle de vidange, l'ouverture d'insertion supérieure étant configurée pour être orientée vers le haut lorsque la station d'accueil repose sur une surface horizontale.

Selon un mode de réalisation de l'invention, le récipient de collecte de déchets est configuré pour être inséré dans et retiré hors du réceptacle de vidange par le dessus de la station d'accueil, et par exemple selon une direction de déplacement qui est sensiblement verticale lorsque la station d'accueil repose sur une surface horizontale.

Selon un mode de réalisation de l'invention, l'axe longitudinal du logement de réception est configuré pour s'étendre sensiblement verticalement lorsque la station d'accueil repose sur une surface horizontale.

Selon un mode de réalisation de l'invention, le premier dispositif d'étanchéité est configuré pour s'étendre au moins en partie autour d'une portion du pourtour d'une paroi périphérique du récipient de collecte de déchets lorsque le récipient de collecte de déchets est reçu dans le logement de réception, et le deuxième dispositif d'étanchéité est configuré pour s'étendre au moins en partie autour d'une portion du pourtour de la paroi périphérique du récipient de collecte de déchets lorsque le récipient de collecte de déchets est reçu dans le logement de réception. Une telle configuration des premier et deuxième dispositifs d'étanchéité permet de positionner au moins une partie des premier et deuxième dispositifs d'étanchéité à distance de la face frontale du récipient de collecte de déchets, et donc de pouvoir utiliser par exemple une trappe de vidange frontale de grandes dimensions, ce qui assure une vidange optimale et rapide du récipient de collecte de déchets lors d'une opération de vidange de ce dernier.

Selon un mode de réalisation de l'invention, la première demi-coque comporte une première encoche débouchant dans un bord supérieur et dans un bord longitudinal de la première demi-coque, et la deuxième demi-coque comporte une deuxième encoche débouchant dans un bord supérieur et dans un bord longitudinal de la deuxième demi-coque, la première encoche et la deuxième encoche étant configurées pour définir une encoche principale lorsque la première demi-coque et la deuxième demi-coque occupent la position fermée, l'encoche principale étant configurée pour loger en partie le récipient de collecte de déchets lorsque le récipient de collecte de déchets est reçu dans le logement de réception. La présence d'une telle encoche principale permet de disposer le récipient de collecte de déchets au plus près du corps principal de l'aspirateur (la présence d'un espace entre le récipient de collecte de déchets et le corps principal de l'aspirateur, pour la réception du bord périphérique supérieur du réceptacle de vidange, n'est en particulier par requis). Ainsi, une telle configuration du réceptacle de vidange permet de rendre plus compact l'aspirateur selon la présente invention.

Selon un mode de réalisation de l'invention, le premier dispositif d'étanchéité s'étend en partie le long d'une portion du contour de la première encoche, et le deuxième dispositif d'étanchéité s'étend en partie le long d'une portion du contour de la deuxième encoche.

Selon un mode de réalisation de l'invention, le premier dispositif d'étanchéité et le deuxième dispositif d'étanchéité sont distincts l'un de l'autre.

Selon un autre mode de réalisation de l'invention, le premier dispositif d'étanchéité et le deuxième dispositif d'étanchéité sont formés par un même joint d'étanchéité.

Selon un mode de réalisation de l'invention, la portion du premier dispositif d'étanchéité configurée pour s'étendre autour d'une portion du pourtour de la paroi périphérique du récipient de collecte de déchets a une forme globalement en arc de cercle, et la portion du deuxième dispositif d'étanchéité configurée pour s'étendre autour d'une portion du pourtour de la paroi périphérique du récipient de collecte de déchets a une forme globalement en arc de cercle.

Selon un mode de réalisation de l'invention, chacune des première et deuxième demi-coques a un axe longitudinal, les axes longitudinaux des première et deuxième demi-coques étant inclinés l'un par rapport à l'autre et divergeant vers le haut lorsque la station d'accueil repose sur une surface horizontale et que les première et deuxième demi-coques occupent la position ouverte.

Selon un autre mode de réalisation de l'invention, chacune des première et deuxième demi-coques a un axe longitudinal, les axes longitudinaux des première et deuxième demi-coques étant sensiblement parallèles et étant espacés l'un de l'autre lorsque les première et deuxième demi-coques occupent la position ouverte.

Selon un mode de réalisation de l'invention, la première demi-coque et la deuxième demi-coque sont articulées l'une par rapport à l'autre selon un axe d'articulation qui s'étend sensiblement parallèlement à l'axe longitudinal central du logement de réception.

Selon un mode de réalisation de l'invention, l'axe d'articulation s'étend à proximité et le long de deux bords longitudinaux adjacents appartenant respectivement à la première demi-coque et à la deuxième demi-coque.

Selon un mode de réalisation de l'invention, la première demi-coque est montée articulée autour d'un premier axe d'articulation et la deuxième demi-coque est montée articulée autour d'un deuxième axe d'articulation qui est sensiblement parallèle au premier axe d'articulation, les premier et deuxième axes d'articulation étant configurés pour s'étendre sensiblement perpendiculairement à l'axe longitudinal central du logement de réception et de part et d'autre d'un plan longitudinal médian du logement de réception.

Selon un mode de réalisation de l'invention, les deux bords longitudinaux de la première demi-coque et les deux bords longitudinaux de la deuxième demi-coque sont configurés pour diverger vers le haut lorsque les première et deuxième demi-coques occupent la position ouverte.

Selon un mode de réalisation de l'invention, la station d'accueil comporte un mécanisme de déplacement disposé au moins en partie dans le réceptacle de vidange et configuré pour être actionné par le récipient de collecte de déchets et pour déplacer automatiquement les première et deuxième demi-coques de la position ouverte à la position fermée lors de l'insertion du récipient de collecte de déchets dans le réceptacle de vidange.

Selon un mode de réalisation de l'invention, le mécanisme de déplacement comporte :
- un au moins un organe d'actionnement monté mobile dans le réceptacle de vidange entre une position de repos et une position d'actionnement et configuré pour être déplacé par le récipient de collecte de déchets de la position de repos à la position d'actionnement lors de l'insertion du récipient de collecte de déchets dans le réceptacle de vidange, et
- un mécanisme de transformation de mouvement configuré pour transformer un mouvement de l'au moins un organe d'actionnement de la position de repos à la position d'actionnement en un mouvement des première et deuxième demi-coques de la position ouverte à la position fermée.

Selon un mode de réalisation de l'invention, l'organe d'actionnement est monté pivotant par rapport à une partie fixe du réceptacle de vidange autour d'un axe de pivotement s'étendant perpendiculairement à l'axe longitudinal du logement de réception.

Selon un mode de réalisation de l'invention, l'organe d'actionnement est circulaire et s'étend sensiblement coaxialement à l'axe longitudinal du logement de réception.

Selon un mode de réalisation de l'invention, l'axe de pivotement de l'organe d'actionnement s'étend sensiblement diamétralement par apport à l'organe d'actionnement.

Selon un mode de réalisation de l'invention, le mécanisme de transformation de mouvement comporte :
- une premier partie d'entraînement fixée à la première demi-coque, et par exemple à une face interne de la première demi-coque, et pourvue d'un premier chemin de guidage, par exemple formé par un trou oblong, une fente de guidage ou encore une rainure de guidage s'étendant transversalement à l'axe longitudinal du logement de réception,
- une deuxième partie d'entraînement fixée à la deuxième demi-coque, et par exemple à une face interne de la deuxième demi-coque, et pourvue d'un deuxième chemin de guidage, par exemple formé par un trou oblong, une fente de guidage ou encore une rainure de guidage s'étendant transversalement à l'axe longitudinal du logement de réception, et
- des premier et deuxième doigts d'actionnement qui sont solidaires en mouvement de l'organe d'actionnement et qui sont respectivement logés dans les premier et deuxième chemins de guidage.

Selon un mode de réalisation de l'invention, le mécanisme de déplacement comporte un organe de rappel configuré pour rappeler l'au moins un organe d'actionnement vers la position de repos, ou pour rappeler les première et deuxième demi-coques vers la position ouverte.

Selon un mode de réalisation de l'invention, l'organe de vidange est monté pivotant sur le récipient de collecte de déchets autour d'un axe de pivotement et entre la configuration d'obturation et la configuration de libération.

Selon un mode de réalisation de l'invention, l'axe de pivotement de l'organe de vidange s'étend transversalement à l'axe longitudinal central du récipient de collecte de déchets.

Selon un mode de réalisation de l'invention, l'axe de pivotement de l'organe de vidange est sensiblement diamétralement opposé à l'embout d'aspiration par rapport à l'axe longitudinal central du récipient de collecte de déchets. En d'autres termes, l'axe de pivotement de l'organe de vidange est situé dans une partie supérieure du récipient de collecte de déchets.

Selon un mode de réalisation de l'invention, l'ouverture de vidange est située à une extrémité frontale du récipient de collecte de déchets, et forme donc une ouverture de vidage frontale.

Selon un mode de réalisation de l'invention, l'organe de vidange est une trappe de vidange frontale.

Selon un mode de réalisation de l'invention, l'aspirateur comporte un moteur d'aspiration logé dans le corps principal, le moteur d'aspiration étant configuré pour générer un flux d'air au travers de l'embout d'aspiration et du dispositif de séparation et de collecte de déchets.

Selon un mode de réalisation de l'invention, la station d'accueil comporte un dispositif de collecte relié fluidiquement au réceptacle de vidange et configuré pour collecter des déchets, provenant du récipient de collecte de déchets, lorsque le récipient de collecte de déchets est reçu dans le logement de réception.

Selon un mode de réalisation de l'invention, le dispositif de collecte comporte un sac à poussière.

Selon un mode de réalisation de l'invention, la station d'accueil comporte un dispositif d'aspiration configuré pour générer une dépression dans le logement de réception et pour convoyer des déchets, provenant du récipient de collecte de déchets, dans le dispositif de collecte.

Selon un mode de réalisation de l'invention, la station d'accueil est configurée pour recharger une batterie rechargeable de l'aspirateur lorsque l'aspirateur est accueilli par la station d'accueil.

Selon un mode de réalisation de l'invention, l'aspirateur est un aspirateur balais.

Selon un autre mode de réalisation de l'invention, l'aspirateur est un aspirateur portatif, également nommé aspirateur à main.

### Brève description des figures

De toute façon l'invention sera bien comprise à l'aide de la description qui suit en référence aux dessins schématiques annexés représentant, à titre d'exemple non limitatif, une forme d'exécution de ce système de nettoyage.
Figure 1 est une vue en perspective d'un système de nettoyage selon un premier mode de réalisation de l'invention ;
Figure 2 est une vue en perspective d'un aspirateur appartenant au système de nettoyage de la figure 1 ;
Figure 3 est une vue schématique en coupe longitudinale d'une station d'accueil appartenant au système de nettoyage de la figure 1 ;
Figure 4 est une vue partielle en perspective de dessus de l'aspirateur de la figure 2 en cours d'insertion dans un réceptacle de vidange appartenant à la station d'accueil de la figure 3 ;
Figure 5 est une vue en perspective de dessus du réceptacle de vidange de la figure 4, montrant des première et deuxième demi-coques du récipient de vidange dans une position ouverte ;
Figure 6 est une vue de dessus du réceptacle de vidange de la figure 4, montrant les première et deuxième demi-coques dans une position ouverte ;
Figure 7 est une vue en perspective du réceptacle de vidange de la figure 4, montrant les première et deuxième demi-coques dans une position fermée ;
Figure 8 est une vue de dessus du réceptacle de vidange de la figure 4, montrant les première et deuxième demi-coques dans la position fermée ;
Figure 9 est une vue arrière du réceptacle de vidange de la figure 4, montrant les première et deuxième demi-coques dans la position ouverte ;
Figure 10 est une vue partielle en perspective de dessus d'un système de nettoyage selon un deuxième mode de réalisation de l'invention ;
Figure 11 est une vue partielle en perspective d'un aspirateur du système de nettoyage de la figure 10 en cours d'insertion dans un réceptacle de vidange appartenant à une station d'accueil dudit système de nettoyage ;
Figure 12 est une vue partielle en perspective de l'aspirateur de la figure 11 inséré dans le réceptacle de vidange de la figure 11, montrant des première et deuxième demi-coques dudit réceptacle de vidange dans une position fermée ;
Figure 13 est une vue de dessus du réceptacle de vidange de la figure 4, montrant les première et deuxième demi-coques dans une position ouverte.

### Description détaillée

Dans le présent document, les termes « avant », « arrière », « frontal », « supérieur », « inférieur », « haut », « dessus » et « en dessous » sont définis par rapport à une utilisation de l'aspirateur durant laquelle l'utilisateur tient l'aspirateur par la poignée de préhension et le maintient sensiblement horizontalement, et l'embout d'aspiration prévu sur le corps principal est situé à l'opposé de l'utilisateur avec l'axe central de l'embout d'aspiration en position horizontale.

Dans le présent document, on entend par « paroi périphérique » du récipient de collecte de déchets, la paroi du récipient de collecte de déchets qui s'étend autour de l'axe longitudinal central du récipient de collecte de déchets.

Dans le présent document, on entend par « plan longitudinal médian », un plan vertical qui est parallèle à l'axe longitudinal central du récipient de collecte de déchets et qui divise le corps principal en deux parties, gauche et droite, sensiblement égales.

A défaut de stipulation contraire, le terme « sensiblement » signifie, dans le présent document, « exactement ou à 10% ou à 10° près ».

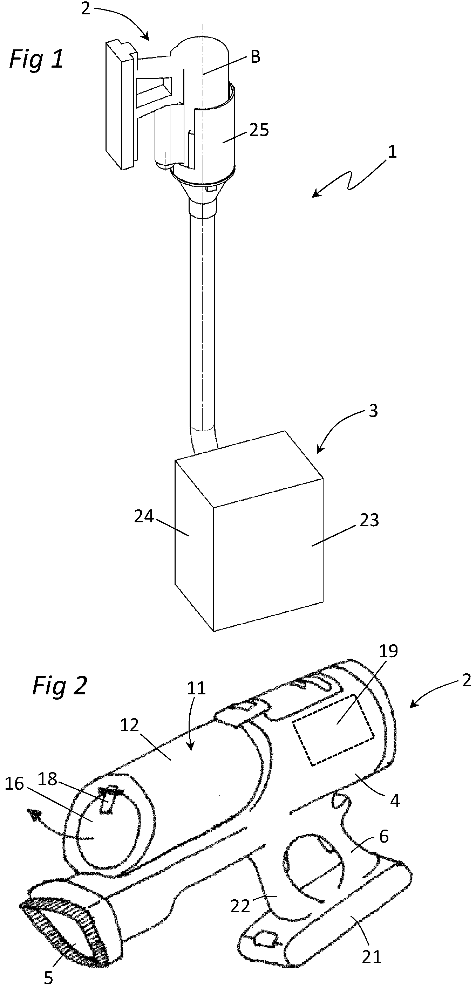

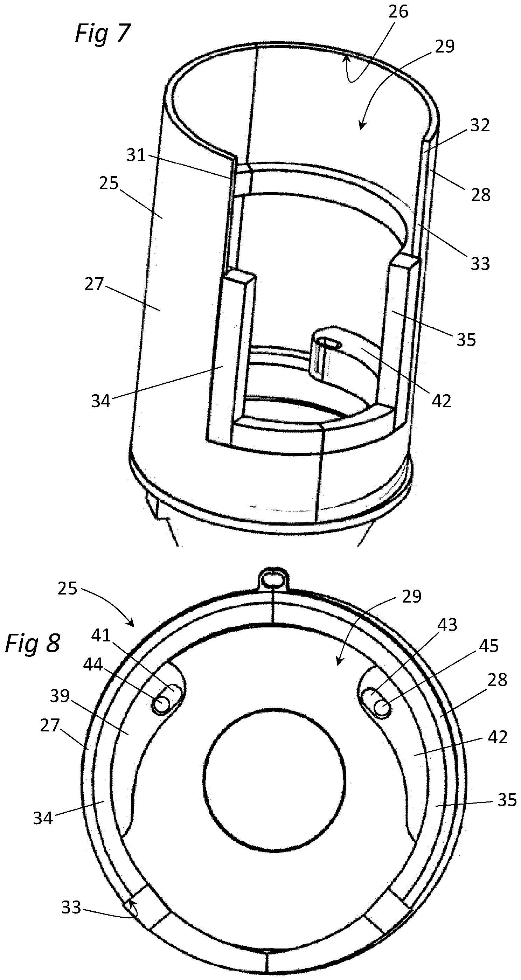

Les figures 1 à 9 représentent un système de nettoyage 1, selon un premier mode de réalisation de l'invention, comprenant un aspirateur 2, et plus particulièrement un aspirateur balais, et une station d'accueil 3 configurée pour accueillir l'aspirateur 2.

L'aspirateur 2 comprend plus particulièrement un corps principal 4 pourvu d'un embout d'aspiration 5 disposé dans une partie avant du corps principal 4, une poignée de préhension 6 reliée mécaniquement au corps principal 4 et permettant la préhension de l'aspirateur 2 par un utilisateur, et une tête d'aspiration (non représentée sur les figures) reliée fluidiquement à l'embout d'aspiration 5 et destinée à reposer sur le sol.

De façon connue, la tête d'aspiration comprend une semelle munie d'une face inférieure configurée pour être orientée vers une surface à nettoyer et d'une bouche d'aspiration débouchant dans la face inférieure de la semelle et par laquelle de l'air extérieur peut être aspiré par l'aspirateur 2. La tête d'aspiration peut être directement fixée à l'embout d'aspiration 5 ou être fixée à ce dernier par l'intermédiaire d'un accessoire d'aspiration (non représentée sur les figures), tel qu'un tube d'aspiration.

De façon avantageuse, la poignée de préhension 6 présente un axe longitudinal médian et s'étend depuis une extrémité arrière du corps principal 4. La poignée de préhension 6 peut être obtenue de fabrication en une seule pièce avec le corps principal 4 ou être rapportée à celui-ci.

L'aspirateur 2 comporte de plus un dispositif de séparation et de collecte de déchets 11 qui est monté, par exemple de manière amovible, sur le corps principal 4 et qui est relié fluidiquement à l'embout d'aspiration 5.

De façon avantageuse, le dispositif de séparation et de collecte de déchets 11 est de type cyclonique. A cet effet, le dispositif de séparation et de collecte de déchets 11 comporte plus particulièrement :
- un récipient de collecte de déchets 12 comprenant une paroi périphérique de forme globalement tubulaire,
- un organe de séparation tubulaire (non représenté sur les figures), tel qu'une grille tubulaire, qui est disposé dans le récipient de collecte de déchets 12 coaxialement à un axe longitudinal central B du récipient de collecte de déchets 12, et
- une chambre de séparation cyclonique (non représentée sur les figures) qui est délimitée extérieurement par la paroi périphérique du récipient de collecte de déchets 12, et intérieurement par l'organe de séparation tubulaire.

Le récipient de collecte de déchets 12 comporte en outre une ouverture d'admission d'air qui est reliée fluidiquement à l'embout d'aspiration 5 et qui débouche dans la chambre de séparation cyclonique.

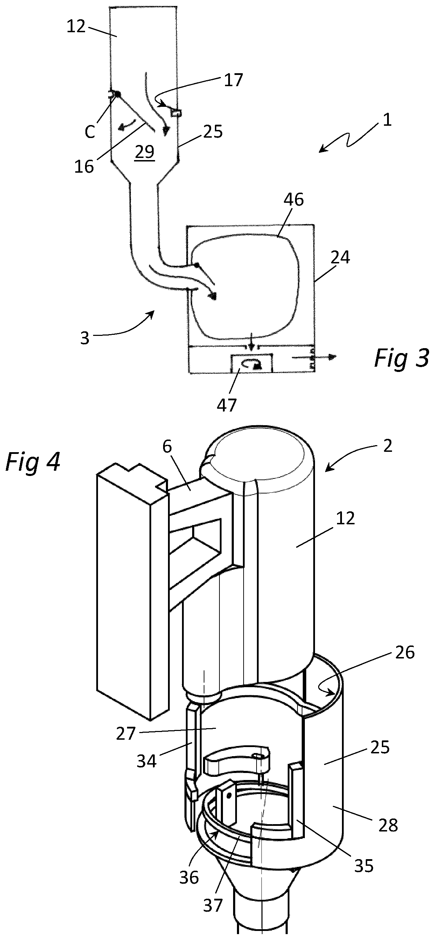

Le dispositif de séparation et de collecte de déchets 11 comporte également un organe de vidange 16, tel qu'une trappe de vidange frontale, configuré pour occuper une configuration d'obturation (voir la figure 2) dans laquelle l'organe de vidange 16 obture une ouverture de vidange 17 prévue sur le récipient de collecte de déchets 12, telle qu'une ouverture de vidange frontale prévue à une extrémité avant du récipient de collecte de déchets 12, et une configuration de libération (voir la figure 3) dans laquelle l'organe de vidange 16 libère l'ouverture de vidange 17.

Selon le mode de réalisation représenté sur les figures 1 à 9, l'organe de vidange 16 est monté pivotant sur le récipient de collecte de déchets 12, et plus particulièrement sur une partie supérieure du récipient de collecte de déchets 12, autour d'un axe de pivotement C et entre la configuration d'obturation et la configuration de libération.

L'axe de pivotement C de l'organe de vidange 16 s'étend transversalement à l'axe longitudinal central B du récipient de collecte de déchets 12, et est situé à proximité d'une extrémité avant du récipient de collecte de déchets 12. De façon avantageuse, l'axe de pivotement C est sensiblement diamétralement opposé à l'embout d'aspiration 5 par rapport à l'axe longitudinal central B du récipient de collecte de déchets 12.

Le dispositif de séparation et de collecte de déchets 11 comporte de plus un organe de sollicitation 18 (voir la figure 2), tel qu'un ressort de sollicitation et notamment une lame ressort ou un ressort de torsion, configuré pour solliciter l'organe de vidange 16 vers la configuration d'obturation.

Comme montré sur la figure 2, l'aspirateur 2 comporte en outre un moteur d'aspiration 19 qui présente un axe de moteur et qui est logé dans le corps principal 4. Le moteur d'aspiration 19 est configuré pour générer un flux d'air au travers de la tête d'aspiration, de l'embout d'aspiration 5 et du dispositif de séparation et de collecte de déchets 11. Le moteur d'aspiration 19 comporte plus particulièrement un ventilateur et un moteur électrique configuré pour entraîner en rotation le ventilateur.

De façon avantageuse, la poignée de préhension 6 est disposée dans une partie arrière de l'aspirateur 2, et le moteur d'aspiration 19 est situé à l'arrière de l'axe longitudinal médian de la poignée de préhension 6.

Selon le mode de réalisation représenté sur les figures 1 à 9, l'axe longitudinal central B du récipient de collecte de déchets 12 est parallèle à l'axe de moteur du moteur d'aspiration 19, et peut par exemple être sensiblement confondu avec l'axe de moteur, et l'axe longitudinal médian de la poignée de préhension 6 est incliné par rapport à l'axe de moteur.

L'aspirateur 2 comprend de plus une batterie rechargeable 21 configurée pour alimenter électriquement l'aspirateur 2, et en particulier le moteur d'aspiration 19. La batterie rechargeable 21, appelée également pack batterie, comprend plusieurs cellules de batterie.

Selon le mode de réalisation représenté sur les figures 1 à 9, la poignée de préhension 6 est disposée entre la batterie rechargeable 21 et le corps principal 4. La batterie rechargeable 21 est avantageusement logée dans un boîtier de batterie relié à la poignée de préhension 6, et plus particulièrement à une partie inférieure de la poignée de préhension 6. De façon avantageuse, l'aspirateur 2 comporte un montant 22 qui s'étend sensiblement parallèlement à la poignée de préhension 6 et entre le boîtier de batterie et le corps principal 4.

Comme montré sur la figure 1, la station d'accueil 3 est configurée pour supporter et positionner l'aspirateur 2 dans une position de stockage dans laquelle l'aspirateur 2 s'étend sensiblement verticalement.

Comme montré sur la figure 1, la station d'accueil 3 comporte notamment une base 23 comprenant un corps de base 24 configuré pour reposer sur le sol, et un réceptacle de vidange 25 configuré pour loger au moins en partie le récipient de collecte de déchets 12 lorsque l'aspirateur 2 est accueilli par la station d'accueil 3. Les déchets contenus dans le récipient de collecte de déchets 12 sont plus particulièrement propres à être vidés dans le réceptacle de vidange 25.

Selon le mode de réalisation représenté sur les figures 1 à 9, le réceptacle de vidange 25 comporte une ouverture d'insertion supérieure 26 à travers laquelle le récipient de collecte de déchets 12 est apte à être inséré dans le réceptacle de vidange 25. De façon avantageuse, l'ouverture d'insertion supérieure 26 est configurée pour être orientée vers le haut lorsque la station d'accueil 3 repose sur une surface horizontale. Ainsi, le récipient de collecte de déchets 12 est configuré pour être inséré dans et retiré hors du réceptacle de vidange 25 par le dessus de la station d'accueil 3, et selon une direction de déplacement qui est sensiblement verticale lorsque la station d'accueil 3 repose sur une surface horizontale.

Comme montré sur les figure 4 à 6, le réceptacle de vidange 25 comporte une première demi-coque 27 et une deuxième demi-coque 28 montées mobiles l'une par rapport à l'autre entre une position ouverte (voir les figure 4 à 6) dans laquelle les première et deuxième demi-coque 28 sont disjointes et le récipient de collecte de déchets 12 est apte à être inséré dans le réceptacle de vidange 25, et une position fermée (voir les figures 1, 7 et 8) dans laquelle les première et deuxième demi-coque 28 sont jointives et refermées l'une sur l'autre de manière à former un logement de réception 29 qui est ouvert vers le haut, qui a un axe longitudinal central et qui est configuré pour loger au moins en partie le récipient de collecte de déchets 12.

De façon avantageuse, l'axe longitudinal du logement de réception 29 est configuré pour s'étendre sensiblement verticalement lorsque la station d'accueil 3 repose sur une surface horizontale, et le réceptacle de vidange 25 présente une forme globalement tubulaire, à section transversale circulaire, lorsque les première et deuxième demi-coques 27, 28 occupent la position fermée.

Les première et deuxième demi-coques 27, 28 sont plus particulièrement configurées pour être jointives selon un plan de jonction qui est sensiblement vertical lorsque la station d'accueil 3 repose sur une surface horizontale et que les première et deuxième demi-coques 27, 28 occupent la position fermée.

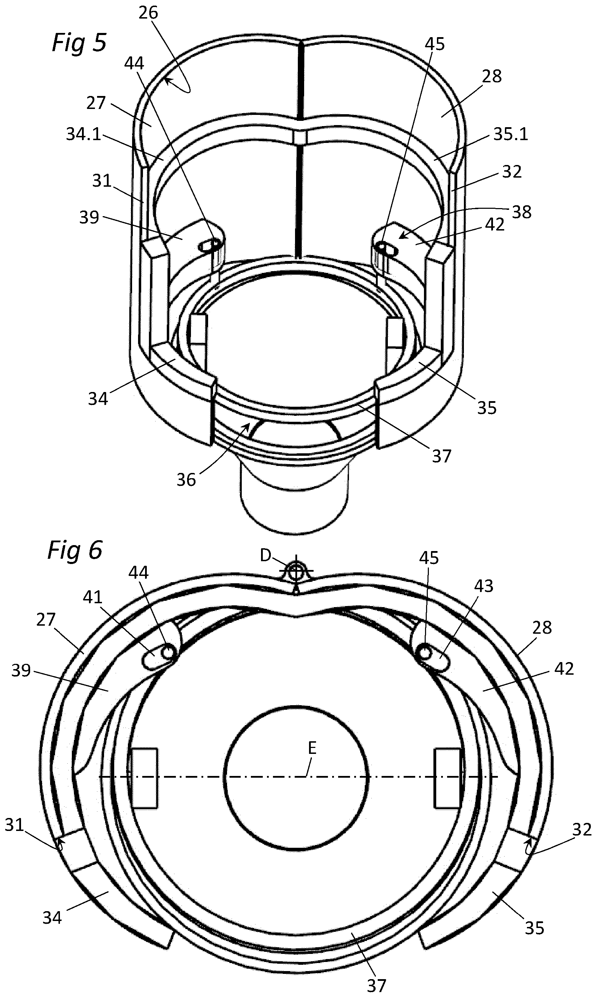

Comme montré sur la figure 5, chacune des première et deuxième demi-coques 27, 28 a un axe longitudinal et présente une forme sensiblement semi-cylindrique. De façon avantageuse, les bords longitudinaux des première et deuxième demi-coques 27, 28 sont jointifs deux à deux lorsque les première et deuxième demi-coques 27, 28 occupent la position fermée.

Selon le mode de réalisation représenté sur les figures 1 à 9, la première demi-coque 27 et la deuxième demi-coque 28 sont articulées l'une par rapport à l'autre selon un axe d'articulation D (voir la figure 6) qui s'étend sensiblement parallèlement à l'axe longitudinal central du logement de réception 29. De façon avantageuse, l'axe d'articulation D s'étend à proximité et le long de deux bords longitudinaux adjacents appartenant respectivement à la première demi-coque 27 et à la deuxième demi-coque 28.

Selon le mode de réalisation représenté sur les figures 1 à 9, les axes longitudinaux des première et deuxième demi-coques 27, 28 sont parallèles et sont espacés l'un de l'autre lorsque les première et deuxième demi-coques 27, 28 occupent la position ouverte, et sont sensiblement confondus lorsque les première et deuxième demi-coques 27, 28 occupent la position fermée.

Comme montré notamment sur la figure 5, la première demi-coque 27 comporte une première encoche 31 débouchant dans un bord supérieur et dans un bord longitudinal de la première demi-coque 27, et la deuxième demi-coque 28 comporte une deuxième encoche 32 débouchant dans un bord supérieur et dans un bord longitudinal de la deuxième demi-coque 28. La première encoche 31 et la deuxième encoche 32 sont configurées pour définir une encoche principale 33, formée sur une paroi périphérique du réceptacle de vidange 25, lorsque la première demi-coque 27 et la deuxième demi-coque 28 occupent la position fermée. L'encoche principale 33 est plus particulièrement configurée pour loger en partie le récipient de collecte de déchets 12 lorsque le récipient de collecte de déchets 12 est reçu dans le logement de réception 29.

La station d'accueil 3 comporte en outre un premier dispositif d'étanchéité 34 fixé à la première demi-coque 27 et un deuxième dispositif d'étanchéité 35 fixé à la deuxième demi-coque 28, les premier et deuxième dispositifs d'étanchéité 34, 35 étant configurés pour coopérer de manière étanche avec le récipient de collecte de déchets 12 lorsque le récipient de collecte de déchets 12 est reçu dans le réceptacle de vidange 25 et que les première et deuxième demi-coques 27, 28 occupent la position fermée. Les premier et deuxième dispositifs d'étanchéité 34, 35 sont plus particulièrement configurés pour s'étendre en partie entre la paroi périphérique du récipient de collecte de déchets 12 et une surface périphérique interne du réceptacle de vidange 25.

Selon le mode de réalisation représenté sur les figures 1 à 9, le premier dispositif d'étanchéité 34 est configuré pour s'étendre en partie autour d'une portion du pourtour d'une paroi périphérique du récipient de collecte de déchets 12 lorsque le récipient de collecte de déchets 12 est reçu dans le logement de réception 29, et s'étend en partie le long d'une portion du contour de la première encoche 31. De façon similaire, le deuxième dispositif d'étanchéité 35 est configuré pour s'étendre en partie autour d'une portion du pourtour de la paroi périphérique du récipient de collecte de déchets 12 lorsque le récipient de collecte de déchets 12 est reçu dans le logement de réception 29, et s'étend en partie le long d'une portion du contour de la deuxième encoche 32.

Comme montré notamment sur la figure 5, la portion du premier dispositif d'étanchéité 34, qui s'étend en partie le long d'une portion du contour de la première encoche 31, s'étend plus particulièrement le long d'un bord latéral de la première encoche 31 et le long du bord inférieur de la première encoche 31. De façon similaire, la portion du deuxième dispositif d'étanchéité 35, qui s'étend en partie le long d'une portion du contour de la deuxième encoche 32, s'étend plus particulièrement le long d'un bord latéral de la deuxième encoche 32 et le long du bord inférieur de la deuxième encoche 32.

De façon avantageuse, la portion 34.1 du premier dispositif d'étanchéité 34, qui est configurée pour s'étendre autour d'une portion du pourtour de la paroi périphérique du récipient de collecte de déchets 12, a une forme globalement en arc de cercle, et la portion 35.1 du deuxième dispositif d'étanchéité 35, qui est configurée pour s'étendre autour d'une portion du pourtour de la paroi périphérique du récipient de collecte de déchets 12, a également une forme globalement en arc de cercle.

Selon le mode de réalisation représenté sur les figures 1 à 9, le premier dispositif d'étanchéité 34 et le deuxième dispositif d'étanchéité 35 sont formés par un même joint d'étanchéité.

La station d'accueil 3 comporte également un mécanisme de déplacement 36 disposé au moins en partie dans le réceptacle de vidange 25 et configuré pour être actionné par le récipient de collecte de déchets 12 et pour déplacer automatiquement les première et deuxième demi-coques 27, 28 de la position ouverte à la position fermée lors de l'insertion du récipient de collecte de déchets 12 dans le réceptacle de vidange 25.

Selon le mode de réalisation représenté sur les figures 1 à 9, le mécanisme de déplacement 36 comporte :
- un organe d'actionnement 37 monté mobile dans le réceptacle de vidange 25 entre une position de repos et une position d'actionnement et configuré pour être déplacé par le récipient de collecte de déchets 12 de la position de repos à la position d'actionnement lors de l'insertion du récipient de collecte de déchets 12 dans le réceptacle de vidange 25, et
- un mécanisme de transformation de mouvement 38 configuré pour transformer un mouvement de l'organe d'actionnement 37 de la position de repos à la position d'actionnement en un mouvement des première et deuxième demi-coques 27, 28 de la position ouverte à la position fermée.

Comme montré sur la figure 5, l'organe d'actionnement 37 est circulaire et s'étend sensiblement coaxialement à l'axe longitudinal du logement de réception 29. L'organe d'actionnement 37 est plus particulièrement monté pivotant par rapport à une partie fixe du réceptacle de vidange 25 autour d'un axe de pivotement E s'étendant perpendiculairement à l'axe longitudinal du logement de réception 29. De façon avantageuse, l'axe de pivotement E de l'organe d'actionnement 37 s'étend diamétralement par apport à l'organe d'actionnement 37, et est configuré pour s'étendre sensiblement horizontalement lorsque la station d'accueil 3 repose sur une surface horizontale.

Comme montré sur la figure 4, lorsque l'organe d'actionnement 37 occupe la position de repos, la portion de l'organe d'actionnement 37 qui est située à l'opposé de l'axe d'articulation D est surélevée par rapport à la portion de l'organe d'actionnement 37 qui est située du côté de l'axe d'articulation D, et lorsque l'organe d'actionnement 37 occupe la position d'actionnement, l'organe d'actionnement 37 s'étend sensiblement horizontalement.

Selon un mode de réalisation représenté sur les figures 1 à 9, le mécanisme de transformation de mouvement 38 comporte :
- une premier partie d'entraînement 39 fixée à la première demi-coque 27, et par exemple à une face interne de la première demi-coque 27, et pourvue d'un premier chemin de guidage 41, par exemple formé par un trou oblong, une fente de guidage ou encore une rainure de guidage s'étendant transversalement à l'axe longitudinal du logement de réception 29,
- une deuxième partie d'entraînement 42 fixée à la deuxième demi-coque 28, et par exemple à une face interne de la deuxième demi-coque 28, et pourvue d'un deuxième chemin de guidage 43, par exemple formé par un trou oblong, une fente de guidage ou encore une rainure de guidage s'étendant transversalement à l'axe longitudinal du logement de réception 29, et
- des premier et deuxième doigts d'actionnement 44, 45 qui sont solidaires en mouvement de l'organe d'actionnement 37 et qui sont respectivement logés dans les premier et deuxième chemins de guidage 41, 43.

Les premier et deuxième doigts d'actionnement 44, 45 sont plus particulièrement configurés pour coulisser dans les chemins de guidage 41, 43 lorsque l'organe d'actionnement 37 est déplacé entre la position de repos et la position d'actionnement.

Le mécanisme de déplacement 36 comporte également un organe de rappel (non représenté sur les figures) configuré pour rappeler l'organe d'actionnement 37 vers la position de repos, ou pour rappeler les première et deuxième demi-coques 27, 28 vers la position ouverte.

La station d'accueil 3 comporte également un dispositif de collecte 46 relié fluidiquement au réceptacle de vidange 25, par exemple par l'intermédiaire d'un tube de liaison, et configuré pour collecter des déchets, provenant du récipient de collecte de déchets 12, lorsque le récipient de collecte de déchets 12 est reçu dans le logement de réception 29. Selon un mode de réalisation de l'invention, le dispositif de collecte 46 comporte un sac à poussière disposé de manière amovible dans un compartiment de réception délimité par le corps de base 24.

La station d'accueil 3 comporte de plus un dispositif d'aspiration 47 configuré pour générer une dépression dans le logement de réception 29, et plus particulièrement pour aspirer des déchets, provenant du récipient de collecte de déchets 12, et pour convoyer les déchets aspirés dans le dispositif de collecte 46. Le dispositif d'aspiration 47 comporte par exemple un moto-ventilateur disposé dans le corps de base 24.

Une opération de vidange du récipient de collecte de déchets 12 est décrite ci-après.

Lorsqu'un utilisateur souhaite vider le contenu du récipient de collecte de déchets 12, il insère une partie avant de ce dernier dans le réceptacle de vidange 25 via l'ouverture d'insertion supérieure 26 et déplace le corps principal 4 selon une direction de déplacement qui est sensiblement verticale. Lors d'un tel déplacement, le récipient de collecte de déchets 12 déplacement l'organe d'actionnement 37 de la position de repos à la position d'actionnement, ce qui entraîne un coulissement des premier et deuxième doigts d'actionnement 44, 45 respectivement dans des premier et deuxième chemins de guidage 41, 43 et donc un pivotement des première et deuxième demi-coques 27, 28 de la position ouverte à la position fermée. Un tel pivotement des première et deuxième demi-coques 27, 28 assure alors une coopération étanche entre les premier et deuxième dispositifs d'étanchéité 34, 35 et le récipient de collecte de déchets 12.

De façon avantageuse, la station d'accueil 3 peut être munie d'un dispositif de détection configuré pour détecter la présence du récipient de collecte de déchets 12 dans le logement de réception 29 (et en particulier le fait que les première et deuxième demi-coques 27, 28 occupent la position fermée), et d'une unité électronique de commande configurée pour commander le fonctionnement de la station d'accueil 3, et en particulier pour commander l'activation du dispositif d'aspiration 47 lorsque le dispositif de détection a détecté la présence du récipient de collecte de déchets 12 dans le logement de réception 29.

Ainsi, lorsque le récipient de collecte de déchets 12 est logé dans le logement de réception 29, le dispositif d'aspiration 47 est automatiquement activé, ce qui génère une dépression dans le logement de réception 29, un déplacement automatique de l'organe de vidange 16 dans la configuration de libération, une aspiration des déchets contenus dans le récipient de collecte de déchets 12 et un convoyage des déchets aspirés jusqu'au dispositif de collecte 46 où ils sont collectés. Cependant, selon une variante de réaliserions de l'invention, le système de nettoyage 1 pourrait être configuré pour automatiquement déplacer l'organe de vidange 16 dans la configuration de libération lors de l'insertion du récipient de collecte de déchets 12 dans le réceptacle de vidange 25.

Ainsi, le système de nettoyage 1 selon la présente invention assure une vidange automatique et aisée du récipient de collecte de déchets 12 sans manipulation de l'organe de vidange 16 par l'utilisateur et sans risque de salissures de l'utilisateur et de son environnement.

Lorsque l'utilisateur retire le récipient de collecte de déchets hors du réceptacle de vidange 25, les première et deuxième demi-coques 27, 28 et l'organe d'actionnement 37 sont automatiquement rappelés respectivement dans la position ouverte et dans la position de repos en raison de la force de rappel exercée par l'organe de rappel sur les première et deuxième demi-coques 27, 28 ou sur l'organe d'actionnement 37.

De façon avantageuse, la station d'accueil 3 est en outre configurée pour recharger la batterie rechargeable 21 de l'aspirateur 2 lorsque ce dernier est accueilli par la station d'accueil 3, et plus particulièrement lorsque le récipient de collecte de déchets 12 est reçu dans le logement de réception 29. Une telle configuration du système de nettoyage 1 selon la présente invention permet de vider le récipient de collecte de déchets 12 et de recharger la batterie rechargeable 21 lorsque l'aspirateur 2 est accueilli dans la station d'accueil 3.

A cet effet, l'aspirateur 2 peut par exemple comporter un premier connecteur électrique pourvu d'une paire de premiers contacts électriques situés dans une partie avant du corps principal 4 de l'aspirateur 2 et reliés, par exemple par des fils de connexion électriques s'étendant à travers le corps principal 4 et la poignée de préhension 6, à la batterie rechargeable 21, et la station d'accueil 3 peut par exemple comporter un deuxième connecteur électrique pourvu d'une paire de deuxièmes contacts électriques situés dans le réceptacle de vidange 25 et configurés pour coopérer électriquement avec les premiers contacts électriques prévus sur l'aspirateur 2 lorsque le récipient de collecte de déchets 12 est logé dans le logement de réception 29.

La station d'accueil 3 comporte par ailleurs un bloc d'alimentation, également nommé adaptateur secteur, configuré pour être raccordé électriquement à une prise d'alimentation électrique, telle qu'une prise secteur et notamment une prise murale, et pour alimenter électriquement la station d'accueil 3, et par exemple le deuxième connecteur électrique.

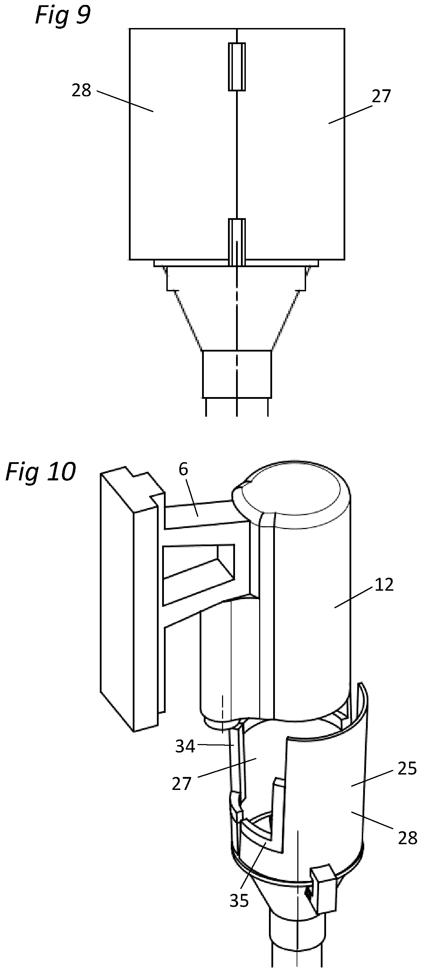

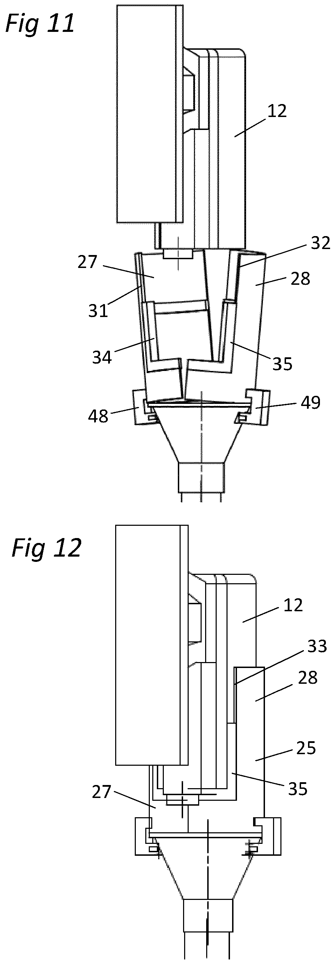

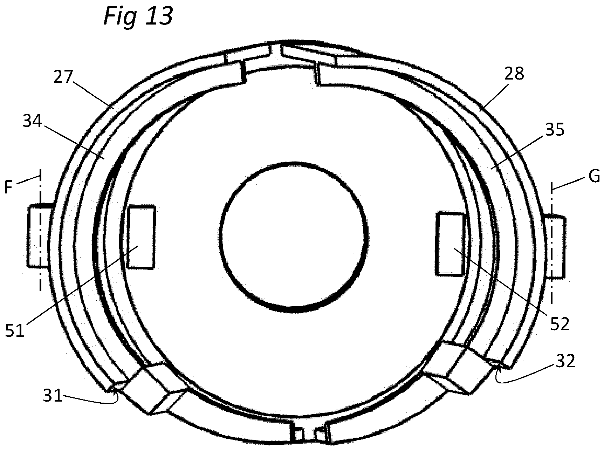

Les figures 10 à 13 représentent un système de nettoyage 1 selon un deuxième mode de réalisation de l'invention qui diffère du premier mode de réalisation essentiellement en ce que la première demi-coque 27 est montée articulée autour d'un premier axe d'articulation F et la deuxième demi-coque 28 est montée articulée autour d'un deuxième axe d'articulation G qui est parallèle au premier axe d'articulation F, les premier et deuxième axes d'articulation F, G étant configurés pour s'étendre sensiblement perpendiculairement à l'axe longitudinal central du logement de réception 29 et étant situés de part et d'autre d'un plan longitudinal médian du logement de réception 29.

En raison d'une telle configuration des première et deuxième demi-coques 27, 28, les axes longitudinaux des première et deuxième demi-coques 27, 28 sont inclinés l'un par rapport à l'autre et divergent vers le haut lorsque la station d'accueil 3 repose sur une surface horizontale et que les première et deuxième demi-coques 27, 28 occupent la position ouverte. En d'autres termes, les deux bords longitudinaux de la première demi-coque 27 et les deux bords longitudinaux de la deuxième demi-coque 28 sont configurés pour diverger vers le haut lorsque les première et deuxième demi-coques 27, 28 occupent la position ouverte.

Selon le deuxième mode de réalisation de l'invention, le mécanisme de déplacement 36 comporte :
- une première partie d'entraînement 48 qui est solidaire en mouvement de la première demi-coque 27 et qui est située à l'opposé de la première demi-coque 27 par rapport au premier axe de pivotement F, et une deuxième partie d'entraînement 49 qui est solidaire en mouvement de la deuxième demi-coque 28 et qui est située à l'opposé de la deuxième demi-coque 28 par rapport au deuxième axe de pivotement G, et
- un premier organe d'actionnement 51 et un deuxième organe d'actionnement 52 qui s'étendent en partie dans le réceptacle de vidange 25 et qui font saillie à l'extérieur du réceptacle de vidange 25 via des première et deuxième ouvertures de passage prévues sur une partie fixe du répétable de vidange, les premier et deuxième organes d'actionnement 51, 52 étant configurés pour coopérer respectivement avec les première et deuxième parties d'entraînement 48, 49 et étant montés mobiles entre une configuration de repos dans laquelle les première et deuxième demi-coques 27, 28 occupent la position ouverte et une configuration d'actionnement dans laquelle les première et deuxième demi-coques 27, 28 occupent la position fermée.

Les premier et deuxième organes d'actionnement 51, 52 sont plus particulièrement configurés pour être déplacés par le récipient de collecte de déchets 12 de la configuration de repos à la configuration d'actionnement lors de l'insertion du récipient de collecte de déchets 12 dans le réceptacle de vidange 25, et pour déplacer les première et deuxième demi-coques 27, 28 de la position ouverte à la position fermée lorsque les premier et deuxième organes d'actionnement 51, 52 sont déplacés de la configuration de repos à la configuration d'actionnement (par exemple en exerçant respectivement des efforts de poussée contre les première et deuxième parties d'entraînement 48, 49).

Selon un tel mode de réalisation de l'invention, les première et deuxième parties d'entraînement 48, 49 forment ainsi un mécanisme de transformation de mouvement équivalent au mécanisme de transformation de mouvement 38 selon le premier mode de réalisation de l'invention.

Il convient d'être noté que, selon le deuxième mode de réalisation de l'invention, le premier dispositif d'étanchéité 34 et le deuxième dispositif d'étanchéité 35 sont distincts l'un de l'autre.

Bien entendu, la présente invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

## Revendications

1. Système de nettoyage (1) comprenant :
- un aspirateur (2) comprenant :
• un corps principal (4) comportant un embout d'aspiration (5),
• une poignée de préhension (6) reliée mécaniquement au corps principal (4), et
• un dispositif de séparation et de collecte de déchets (11) relié fluidiquement à l'embout d'aspiration (5), le dispositif de séparation et de collecte de déchets (11) comportant un récipient de collecte de déchets (12) pourvu d'un axe longitudinal central et d'une ouverture de vidange (17), et un organe de vidange (16) configuré pour occuper une configuration d'obturation dans laquelle l'organe de vidange (16) obture l'ouverture de vidange (17) et une configuration de libération dans laquelle l'organe de vidange (16) libère l'ouverture de vidange (17), et
- une station d'accueil (3) configurée pour accueillir l'aspirateur (2), la station d'accueil (3) comprenant un réceptacle de vidange (25) configuré pour loger au moins en partie le récipient de collecte de déchets (12) lorsque l'aspirateur (2) est accueilli par la station d'accueil (3),
**caractérisé en ce que** le réceptacle de vidange (25) comporte une première demi-coque (27) et une deuxième demi-coque (28) montées mobiles l'une par rapport à l'autre entre une position ouverte dans laquelle les première et deuxième demi-coque (28) sont disjointes et le récipient de collecte de déchets (12) est apte à être inséré dans le réceptacle de vidange (25) et une position fermée dans laquelle les première et deuxième demi-coque (28) sont jointives et refermées l'une sur l'autre de manière à former un logement de réception (29) ayant un axe longitudinal central et configuré pour loger au moins en partie le récipient de collecte de déchets (12), et **en ce que** la station d'accueil (3) comporte un premier dispositif d'étanchéité (34) fixé à la première demi-coque (27) et un deuxième dispositif d'étanchéité (35) fixé à la deuxième demi-coque (28), les premier et deuxième dispositifs d'étanchéité (34, 35) étant configurés pour coopérer de manière étanche avec le récipient de collecte de déchets (12) lorsque les première et deuxième demi-coques (27, 28) occupent la position fermée.

2. Système de nettoyage (1) selon la revendication 1, dans lequel le réceptacle de vidange (25) présente une forme globalement tubulaire lorsque les première et deuxième demi-coques (27, 28) occupent la position fermée.

3. Système de nettoyage (1) selon la revendication 1 ou 2, dans lequel le réceptacle de vidange (25) comporte une ouverture d'insertion supérieure (26) à travers laquelle le récipient de collecte de déchets (12) est apte à être inséré dans le réceptacle de vidange (25), l'ouverture d'insertion supérieure (26) étant configurée pour être orientée vers le haut lorsque la station d'accueil (3) repose sur une surface horizontale.

4. Système de nettoyage (1) selon l'une quelconque des revendications 1 à 3, dans lequel le premier dispositif d'étanchéité (34) est configuré pour s'étendre au moins en partie autour d'une portion du pourtour d'une paroi périphérique du récipient de collecte de déchets (12) lorsque le récipient de collecte de déchets (12) est reçu dans le logement de réception (29), et le deuxième dispositif d'étanchéité (35) est configuré pour s'étendre au moins en partie autour d'une portion du pourtour de la paroi périphérique du récipient de collecte de déchets (12) lorsque le récipient de collecte de déchets (12) est reçu dans le logement de réception (29).

5. Système de nettoyage (1) selon l'une quelconque des revendications 1 à 4, dans lequel la première demi-coque (27) comporte une première encoche (31) débouchant dans un bord supérieur et dans un bord longitudinal de la première demi-coque (27), et la deuxième demi-coque (28) comporte une deuxième encoche (32) débouchant dans un bord supérieur et dans un bord longitudinal de la deuxième demi-coque (28), la première encoche (31) et la deuxième encoche (32) étant configurées pour définir une encoche principale (33) lorsque la première demi-coque (27) et la deuxième demi-coque (28) occupent la position fermée, l'encoche principale (33) étant configurée pour loger en partie le récipient de collecte de déchets (12) lorsque le récipient de collecte de déchets (12) est reçu dans le logement de réception (29).

6. Système de nettoyage (1) selon la revendication 5, dans lequel le premier dispositif d'étanchéité (34) s'étend en partie le long d'une portion du contour de la première encoche (31), et le deuxième dispositif d'étanchéité (35) s'étend en partie le long d'une portion du contour de la deuxième encoche (32).

7. Système de nettoyage (1) selon l'une quelconque des revendications 1 à 6, dans lequel chacune des première et deuxième demi-coques (27, 28) a un axe longitudinal, les axes longitudinaux des première et deuxième demi-coques (27, 28) étant inclinés l'un par rapport à l'autre et divergeant vers le haut lorsque la station d'accueil (3) repose sur une surface horizontale et que les première et deuxième demi-coques (27, 28) occupent la position ouverte.

8. Système de nettoyage (1) selon l'une quelconque des revendications 1 à 6, dans lequel chacune des première et deuxième demi-coques (27, 28) a un axe longitudinal, les axes longitudinaux des première et deuxième demi-coques (27, 28) étant sensiblement parallèles et étant espacés l'un de l'autre lorsque les première et deuxième demi-coques (27, 28) occupent la position ouverte.

9. Système de nettoyage (1) selon l'une quelconque des revendications 1 à 8, dans lequel la première demi-coque (27) et la deuxième demi-coque (28) sont articulées l'une par rapport à l'autre selon un axe d'articulation (D) qui s'étend sensiblement parallèlement à l'axe longitudinal central du logement de réception (29).

10. Système de nettoyage (1) selon l'une quelconque des revendications 1 à 9, dans lequel la première demi-coque (27) est montée articulée autour d'un premier axe d'articulation et la deuxième demi-coque (28) est montée articulée autour d'un deuxième axe d'articulation qui est sensiblement parallèle au premier axe d'articulation, les premier et deuxième axes d'articulation étant configurés pour s'étendre sensiblement perpendiculairement à l'axe longitudinal central du logement de réception (29) et de part et d'autre d'un plan longitudinal médian du logement de réception (29).

11. Système de nettoyage (1) selon l'une quelconque des revendications 1 à 10, dans lequel la station d'accueil (3) comporte un mécanisme de déplacement (36) disposé au moins en partie dans le réceptacle de vidange (25) et configuré pour être actionné par le récipient de collecte de déchets (12) et pour déplacer automatiquement les première et deuxième demi-coques (27, 28) de la position ouverte à la position fermée lors de l'insertion du récipient de collecte de déchets (12) dans le réceptacle de vidange (25).

12. Système de nettoyage (1) selon la revendication 11, dans lequel le mécanisme de déplacement (36) comporte :
- au moins un organe d'actionnement (37) monté mobile dans le réceptacle de vidange (25) entre une position de repos et une position d'actionnement et configuré pour être déplacé par le récipient de collecte de déchets (12) de la position de repos à la position d'actionnement lors de l'insertion du récipient de collecte de déchets (12) dans le réceptacle de vidange (25), et
- un mécanisme de transformation de mouvement (38) configuré pour transformer un mouvement de l'au moins un organe d'actionnement (37) de la position de repos à la position d'actionnement en un mouvement des première et deuxième demi-coques (27, 28) de la position ouverte à la position fermée.

13. Système de nettoyage (1) selon la revendication 11 ou 12, dans lequel le mécanisme de déplacement (36) comporte un organe de rappel configuré pour rappeler l'au moins un organe d'actionnement (37) vers la position de repos.

14. Système de nettoyage (1) selon l'une quelconque des revendications 1 à 13, dans lequel la station d'accueil (3) comporte un dispositif de collecte (46) relié fluidiquement au réceptacle de vidange (25) et configuré pour collecter des déchets, provenant du récipient de collecte de déchets (12), lorsque le récipient de collecte de déchets (12) est reçu dans le logement de réception (29).

15. Système de nettoyage (1) selon l'une quelconque des revendications 1 à 14, dans lequel la station d'accueil (3) est configurée pour recharger une batterie rechargeable (21) de l'aspirateur (2) lorsque l'aspirateur (2) est accueilli par la station d'accueil (3).
